Europäisches Patentamt

European Patent Office

Office européen des brevets

(19)

(11) Veröffentlichungsnummer : **0 200 193**
**B1**

(12) **EUROPÄISCHE PATENTSCHRIFT**

(45) Veröffentlichungstag der Patentschrift :
30.08.89

(21) Anmeldenummer : 86105852.7

(22) Anmeldetag : 28.04.86

(51) Int. Cl.⁴ : **A 61 C   9/00**

(54) Vorrichtung zur Fertigung von Zahnkranzmodellen.

(30) Priorität : 30.04.85 DE 3515510

(43) Veröffentlichungstag der Anmeldung :
05.11.86 Patentblatt 86/45

(45) Bekanntmachung des Hinweises auf die Patenterteilung : 30.08.89 Patentblatt 89/35

(84) Benannte Vertragsstaaten :
AT BE CH DE FR GB IT LI LU NL SE

(56) Entgegenhaltungen :
EP--A-- 0 044 223
EP--A-- 0 116 163
WO—A-79 /000 76
DE—B-- 2 835 094
GB—A-- 2 092 058
US--A-- 3 702 027

(73) Patentinhaber : ESPE Stiftung & Co Produktions- und
Vertriebs KG
D-8031 Seefeld (DE)

(72) Erfinder : Burger, Bernd
Am Weinberg 27
D-8031 Alling (DE)

(74) Vertreter : Müller, Bernhard, Dr. et al
Graf-Toerring-Strasse 45
D-8031 Seefeld 2 (DE)

EP 0 200 193 B1

## Beschreibung

Die Erfindung betrifft gemäß dem ersten Teil von Anspruch 1, eine Vorrichtung zur Fertigung von Zahnkranzmodellen, insbesondere von sog. Sägemodellen, bei denen die Zähne einzeln oder in Gruppen lösbar mit einer Sockelplatte verbunden sind.

Eine derartige Vorrichtung ist beispielsweise aus der US-A-3 702 027 bekannt. Für verschiedene zahntechnische Arbeiten ist es erforderlich, über ein massgetreues Zahn- und Kiefermodell, ein sog. Meistermodell, zu verfügen. Zur Herstellung eines derartigen Modells wird ein dem Kiefer des Patienten entnommener Abdruck mit Gips ausgegossen. Das erhaltene Zahnkranzmodell wird in der Regel auf einer Sockelplatte, die meistens ebenfalls aus Gips besteht, befestigt. Für bestimmte zahntechnische Arbeiten, z. B. beim Anpassen von Kronen oder Brücken, ist es erwünscht, dass einzelne Zähne oder Zahngruppen in Form von Segmenten von der Sockelplatte entfernt und nach der Bearbeitung wieder passgenau eingesetzt werden können. Hierzu sind bei herkömmlichen Modellen Stifte, sog. Dowel-pins, vorgesehen, die an einem Ende fest mit den Zahnkranzsegmenten verbunden sind und deren freie Enden in entsprechende Löcher, die in der Sockelplatte vorgesehen sind, passen. Beim Herausziehen der Dowel-pins aus den Löchern entstehen relativ hohe Friktionskräfte, die es verhindern, dass sich die Segmente ungewollt von der Sockelplatte lösen.

Diese Dowel-pin-Technik ist jedoch u.a. mit folgenden Nachteilen behaftet:

1. Die Stifte müssen genau parallel zueinander angeordnet sein, da ansonsten ein problemfreies Entnehmen und Wiedereinsetzen von Zahnkranzsegmenten nicht möglich ist. Zum Setzen der Stifte werden relativ aufwendige Pin- Setzgeräte verwendet.

2. Ein präziser Sitz der einzelnen Zehnkranzsegmente ist nur schwer zu erreichen, insbesondere wenn sich an Stiften und Löchern durch häufiges Herausnehmen Abnützungserscheinungen einstellen.

3. Die Sockelplatte kann in der Regel nur einmal verwendet werden, da Stifte und Löcher einander genau zugeordnet sind und es in der Praxis nicht möglich ist, an einem Zahnkranz die Pins genau passend zu einer vorhandenen, bereits mit Bohrlöchern versehenen Sockelplatte einzusetzen.

4. Modelle für Kronen und Brücken werden in der Regel aus Wachs hergestellt. Bei sämtlichen Modellen, bei denen die Zahnkranzmodelle durch Friktionskräfte an der Sockelplatte halten, besteht der schwerwiegende Nachteil, dass zum Entnehmen der Segemte relativ hohe Friktionskräfte zu überwinden sind. Unvermeidlich kommt es dabei zu Verkantungen, so dass leicht Beschädigungen der in Wachs modellierten Teile eintreten.

Man hat bereits versucht, bei derartigen Zahnmodellen auf die Verwendung von Dowel-pins zu verzichten. Durchwegs wurden dabei Lösungsmöglichkeiten vorgeschlagen, bei denen der Zusammenhalt zwischen Zahnkranz und Sockelplatte ebenfalls durch Friktionskräfte gewährleistet wird. So ist in der europäischen Patentanmeldung 0 044 223 ein derartiges Modell beschrieben, dessen Zahnkranz an der Unterseite ein Muster aus parallelen Zickzack-Rippen und -Rillen aufweist. Auf der Oberseite der Sockelplatte ist ein hierzu komplementäres Muster vorgesehen. Werden Zahnkranz und Sockelplatte aufeinandergesetzt, so greifen Rippen und Rillen ineinander und sorgen durch Friktionskräfte für einen Zusammenhalt der beiden Teile. Auch hier kommt es zu den vorstehend erläuterten Schwierigkeiten, insbesondere besteht die Gefahr der unter 4. beschriebenen Beschädigung von aus Wachs gefertigten Modellteilen, wenn die einzelnen Zahnsegmente von der Sockelplatte gelöst werden.

Ähnliche Rippenstrukturen wie die der vorgenannten EP-A-0 044 223 sind aus WO-A-7 900 076 und US-A-3 702 027 bekannt.

Aufgabe der Erfindung ist es, eine Vorrichtung zur Fertigung von Zahnkranzmodellen mit abnehmbaren Zahnkranzsegmenten bereitzustellen, bei der die Zahnkranzsegmente einfach und passgenau an der Sockelplatte befestigt werden können, ohne dass sich der Sitz der Segmente nach wiederholtem Abnehmen lockert und ohne dass die Gefahr einer Beschädigung von aus Wachs gefertigten Modellen besteht.

Gegenstand der Erfindung ist eine Vorrichtung zur Fertigung von Zahnkranzmodellen, bestehend aus einem insbesondere etwa U-förmigen Zahnkranzträger, auf dessen Oberseite ein Zahnkranz zu befestigen ist, und welcher Zahnkranzträger in eine komplementäre Ausnehmung einer Sockelplatte einsetzbar und lösbar mit dieser zu verbinden ist, wobei am Aussenumfang des Zahnkranzträgers parallel zueinander angeordnete, sich von der Oberseite in Richtung Unterseite erstreckende Rippen vorgesehen sind, die in dazu komplementäre, in der Sockelplatte angeordnete Rillen eingreifen, wobei die Vorrichtung dadurch gekennzeichnet ist, dass der Zusammenhalt zwischen dem Zahnkranzträger und der Sockelplatte durch magnetische Kräfte erfolgt.

Hierzu ist sowohl im Zahnkranzträger als auch in der Sockelplatte jeweils ein magnetisches Material enthalten. Unter dem Ausdruck « magnetisches Material » ist zu verstehen, dass zumindest in einem der beiden Teile ein permanent magnetisches und im jeweils anderen Teil ein magnetisierbares oder ebenfalls permanent magnetisches Material enthalten sind.

Vorzugsweise werden als magnetische Materialien gefüllte Kunststoffe verwendet, die den Vorteil bieten, dass sie leicht verformbar und bearbeitbar sind. Als Füllstoffe kommen übliche magnetische Werkstoffe in Pulverform in Frage, z. B. Eisen, Kobalt, Nickel, deren Legierungen, Ferrate und dergl.

Die Anwendung magnetischer Kräfte zur Gewährleistung des Zusammenhalts zwischen Zahnkranzträger und Sockelplatte bietet den Vorteil, dass die den Zusammenhalt bewirkende Kraft immer konstant bleibt und keiner Beeinträchtigung durch Materialabnutzung unterliegt. Da Friktionskräfte weitgehend ausgeschaltet sind, ist es auch nicht erforderlich, zu deren Überwindung ruckartige Bewegungen auszuführen, bei denen es leicht zu Verkantungen und somit zu einer Beschädigung von Wachsteilen kommt. Ferner ist eine Mehrfachverwendung der Sockelplatte ohne Schwierigkeiten möglich. Schliesslich bietet sich der Vorteil, dass sich die Vorrichtung zeitsparend herstellen lässt.

Gemäss einer bevorzugten Ausführungsform der erfindungsgemässen Vorrichtung besteht der Zahnkranzträger im wesentlichen aus einem U-förmigen, ein magnetisches Material enthaltenden Steg mit nach unten konisch zulaufenden Seitenwänden. Die Sockelplatte weist hierbei eine zum Steg komplementäre Ausnehmung auf, in dessen Oberflächenbereich sich ebenfalls magnetisches Material befindet. Dieser konische Steg erleichtert die exakte Zuordnung der Zahnsegmente zur Sockelplatte. Aufgrund des konischen Querschnitts wird gewährleistet, dass beim Herausnehmen der Segmente nur vernachlässigbar geringe Friktionskräfte auftreten, was die vorstehend geschilderten Vorteile mit sich bringt.

Zweckmässigerweise weist der Steg einen parallel oder in spitzem Winkel zur Ebene der Sockelplatte verlaufenden Absatz auf, der einem weiteren Absatz in der Sockelplatte entspricht. Vorzugsweise verläuft der Absatz an der Innenwand der Sockelplatte nicht parallel zur Ebene der Sockelplatte, sondern ist um einen geringen Winkel, z. B. 5 bis 10°, zum Zentrum der Sockelplatte hin geneigt, damit gewisse Toleranzen bei der Passung zwischen Zahnkranzträger und Sockelplatte leichter ausgeglichen werden können. Entsprechend muss dann der Absatz im Steg des Zahnkranzträgers geneigt sein. Im Bereich des Absatzes in der Sockelplatte sind vorzugsweise Permanentmagneten eingelassen, die den Zusammenhalt mit dem vorzugsweise aus einem mit magnetischem Material gefüllten Kunststoff bestehenden Steg gewährleisten.

Um die Zuordnung der Segmente der Sockelplatte zu erleichtern und um die Passgenauigkeit zu erhöhen, sind an den konischen Seitenwänden des Stegs vorzugsweise Rippen angeordnet, die parallel zueinander laufen. An der Ausnehmung in der Sockelplatte sind dann in entsprechender Weise hierzu komplementäre Rillen vorgesehen.

Gemäss einer weiteren bevorzugten Ausführungsform sind an der Unterseite der Sockelplatte Schlitze oder Bohrungen vorgesehen, durch die der Zahnkranzträger von unten mit der Sockelplatte verschraubt werden kann. Dies bietet den Vorteil, dass verschiedene Arbeiten, insbesondere Fräsarbeiten, direkt am Zahnkranzmodell möglich sind.

Besonders vorteilhaft ist es, den in die Sockelplatte eingelassenen Magneten so auszubilden, dass er nach unten entfernbar ist. Der Magnet kann dann beispielsweise durch Schrauben, einen druckknopfartigen Verschluss oder eine Art Bajonettverschluss festgehalten werden. Dadurch wird nach Entfernung des Magneten die Entnahme der Zahnkranzsegmente besonders einfach möglich. Ausserdem kann, falls die Sockelplatte beschädigt ist, der relativ teure Magnet in eine andere Sockelplatte umgesetzt werden.

Weiterhin hat es sich als vorteilhaft herausgestellt, wenn beim Giessen des Wurzelkranzes die Schlitze oder Bohrungen an der Unterseite der Sockelplatte durch einen Platzhalter, z. B. aus Silicongummi, verschlossen werden, damit ein Auslaufen der fliessfähigen Masse nicht möglich ist.

Schliesslich kann an der Unterseite der Sockelplatte im zentralen Bereich ein Magnet eingelassen sein, mit dem die Vorrichtung an einem Artikulator befestigt werden kann.

Zweckmässigerweise wird die erfindungsgemässe Vorrichtung in verschiedenen Grössen zur Anpassung an die Grössenverhältnisse im Ober- und Unterkiefer bereitgestellt.

Nachstehend wird eine bevorzugte Ausführungsform der Erfindung anhand der Zeichnung näher erläutert. Es zeigen :

Fig. 1 eine in Einzelteile aufgelöste, perspektivische Ansicht einer erfindungsgemässen Vorrichtung zusammen mit einem Zahnkranz ;

Fig. 2 einen Querschnitt entlang II-II des Zahnkranzträgers von Fig. 1 ;

Fig. 3 eine Unteransicht einer Sockelplatte mit Verschraubung des Zahnkranzträgers und

Fig. 4 einen Querschnitt entlang IV-IV von Fig. 3.

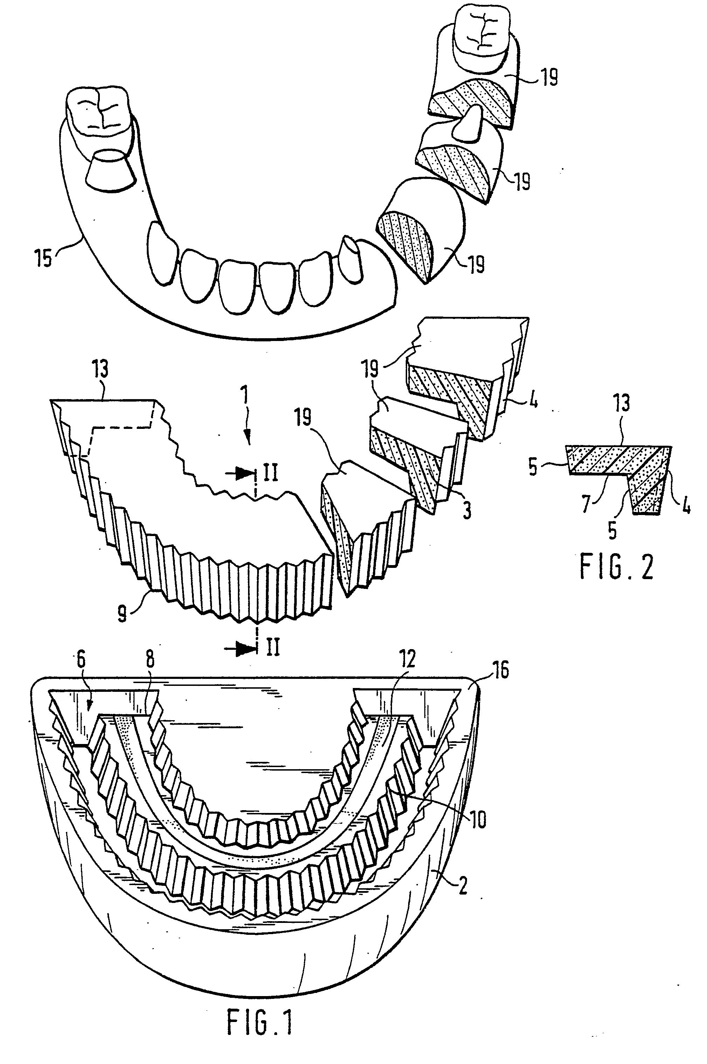

In Fig. 1 ist ein Zahnkranzträger 1 gezeigt, der im wesentlichen aus einem in etwa U-förmigen Steg besteht, dessen Seitenwände 4, 5 nach unten konisch aufeinander zulaufen. Die Seitenwände 4, 5 sind mit parallel verlaufenden Rippen 9 versehen.

Aus dem in Fig. 2 dargestellten Querschnitt des Zahnkranzträgers 1 ist ersichtlich, dass sich in der inneren Seitenwand 5 ein Absatz 7 befindet.

Beim Einsatz der erfindungsgemässen Vorrichtung in der Praxis wird auf den Zahnkranzträger 1 der durch Ausgiessen des Kieferabgusses erhaltene eigentliche Zahnkranz 15 befestigt. Zweckmässigerweise geschieht dies durch flächige Verklebung mittels eines rasch abbindenden Klebers. Die erhaltene Anordnung aus Zahnkranz und Zahnkranzträger kann dann je nach Bedarf durch senkrechte Sägeschnitte zu Segmenten 19 von einzelnen Zähnen oder Zahngruppen aufgeteilt werden.

Zur Herstellung des Zahnkranzträgers kann generell ein fliessfähiges, erhärtendes Monomeres und/oder Präpolymeres eingesetzt werden, das eine geringe Schrumpfung aufweist und mit einem magnetischen oder magnetisierbaren Metallpulver gefüllt ist.

In der Sockelplatte 2 von Fig. 1 ist eine U-förmige Ausnehmung 6 vorgesehen, die komplementär zur Form des Stegs 3 ist, d. h. die Seitenwände der Ausnehmung 6 verlaufen nach unten konisch aufeinander zu und ein Absatz 8 an der Innenwand entspricht dem Absatz 7 des Stegs 3. Ferner sind an den Aussenwänden der Ausnehmung 6 parallel zueinander verlaufende Rillen 10 vorgesehen, die zur Aufnahme der Rippen 9 dienen. Somit ergibt sich an den Seitenwänden des Stegs und der Ausnehmung jeweils ein zickzack-förmiges Muster. Diese zueinander komplementären Muster erleichtern ein passgenaues Einsetzen des Zahnkranzträgers 1 in die Ausnehmung 6. Aufgrund des konisch verlaufenden Querschnitts des Stegs 3 und der Ausnehmung 6 ergeben sich beim Herausnehmen des Zahnkranzträgers 1 nur sehr geringe Friktionskräfte. Vielmehr wird der Zusammenhalt mit dem aus magnetischem Material bestehenden Steg 3 durch flächige Magneten 12 gewährleistet, die im Bereich des Absatzes 8 angeordnet sind.

Zur Herstellung der erfindungsgemässen Vorrichtung geht man von einem Rohling für die Sockelplatte aus und stellt durch spanabhebende Bearbeitung die Ausnehmung 6 her. Eine andere Möglichkeit besteht darin, dass die Sockelplatte unter Verwendung entsprechender Formen durch Spritzgiessen oder ähnliche Verformungstechniken auf einmal hergestellt wird.

In die Ausnehmung 6 wird dann das vorerwähnte fliessfähige Material zur Herstellung des Zahnkranzträgers gegossen und aushärten gelassen. Da sich der Giessvorgang beliebig oft wiederholen lässt, ist eine Mehrfachverwendung der Sockelplatte gewährleistet. Eine andere Möglichkeit ist die separate Herstellung des Zahnkranzträgers durch Spritzgiessen oder eine andere präzise Formgebungstechnik. Damit sich der polymerisierte Zahnkranzträger gut von der Sockelplatte lösen lässt, soll letztere eine möglichst glatte Oberfläche aufweisen. Als Materialien für die Sockelplatte kommen Kunststoffe und Metalle in Frage. Beispiele hierfür sind Polyoxymethylen (Delrin$^R$), Polyäthylen, Polypropylen, Polyamid, Polymethacrylat (Plexiglas$^R$), Polyvinylchlorid, Messing und Aluminium.

Ein Beispiel für einen zum Aufkleben des Zahnkranzes auf dem Zahnkranzträger geeigneten Klebstoff ist Cyanacrylatkleber.

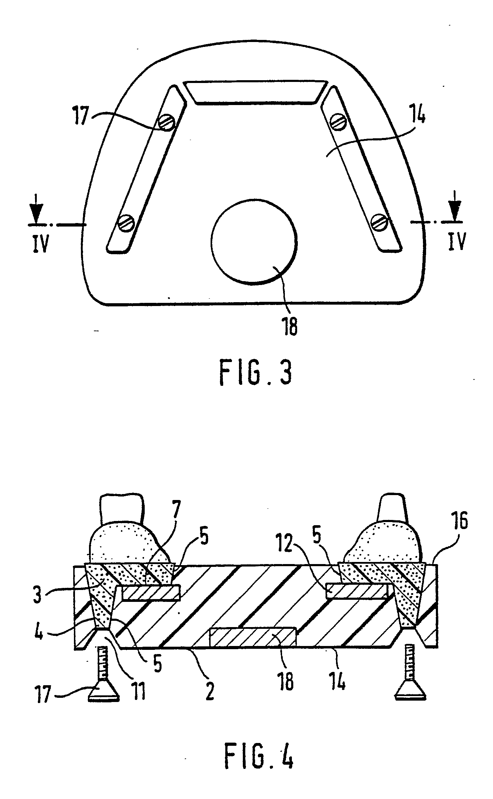

Gemäss der in den Fig. 3 und 4 gezeigten Ausführungsform weist die Sockelplatte auf der Unterseite 14 Schlitze 11 mit konischem Querschnitt auf, durch die der Zahnkranzträger von unten her mit Schrauben 17 angeschraubt werden kann. Dies ermöglicht eine starre und unlösbare Verbindung zwischen Sockelplatte 2 und Zahnkranzträger 1, so dass Fräsarbeiten an einzelnen Teilen direkt an der erfindungsgemässen Vorrichtung durchgeführt werden können, ohne dass es erforderlich ist, die einzelnen Zahnsegmente herauszunehmen und getrennt einzuspannen.

Auf der Unterseite der Sockelplatte 2 ist in einem zentralen Bereich ein Magnet 18 eingelassen, mit dessen Hilfe die erfindungsgemässe Vorrichtung an einem Artikulator angebracht werden kann.

Das nachstehende Beispiel erläutert die Erfindung.

Beispiel

25 g feines Eisenpulver (< 100 μm, mittlere Teilchengrösse etwa 15 μm) werden mit 10 g 2,2-Bis-[p-(β-hydroxyäthoxy)-phenyl]-propan-bis-β-äthyleniminobutyrat (polymerisierbares Präpolymeres) und 300 mg 2-Äthylhexyl-äthyl-sulfonium-isobutyronitril-fluoroborat (Polymerisationsinitiator) zu einer homogenen Mischung verarbeitet. Diese gut fliessfähige Mischung wird direkt nach dem Anmischen in die Ausnehmung 6 einer Sockelplatte 2 aus Polypropylen gegossen und dort aushärten gelassen. Die Masse, die bei Raumtemperatur etwa 5 Minuten fliessfähig bleibt, ist nach etwa 15 Minuten ausgehärtet. Nach der Aushärtung wird der fertige Zahnkranzträger 1 aus der Sockelplatte 2 entnommen. Die Oberseite 13 des Zahnkranzträgers wird flächig mit einem aus Gips hergestellten Zahnkranzmodell 15 mit Cyanacrylatkleber verklebt. Die fertige Anordnung aus Zahnkranz und Zahnkranzträger wird durch senkrechte Schnitte in einzelne Zahnsegmente 19 aufgetrennt, die sich unter Zuhilfenahme der Sockelplatte 2 leicht wieder zum vollständigen Zahnkranzmodell zusammensetzen lassen.

## Patentansprüche

1. Vorrichtung zur Fertigung von Zahnkranzmodellen, bestehend aus einem insbesondere etwa U-förmigen Zahnkranzträger (1), aus dessen Oberseite (13) ein Zahnkranz (15) zu befestigen ist, und welcher Zahnkranzträger in eine komplementäre Ausnehmung (6) einer Sockelplatte (2) einsetzbar und lösbar mit dieser zu verbinden ist, wobei am Außenumfang des Zahnkranzträgers parallel zueinander angeordnete, sich von der Oberseite in Richtung Unterseite erstreckende Rippen (9) vorgesehen sind, die in dazu komplementäre, in der Sockelplatte (2) angeordnete Rillen (10) eingreifen, dadurch gekennzeichnet, daß der Zusammenhalt zwischen dem Zahnkranzträger (1) und der Sockelplatte (2) durch magnetische Kräfte erfolgt.

2. Vorrichtung nach Anspruch 1, dadurch gekennzeichnet, daß die Rippen (9) an einem an der Unterseite des Zahnkranzträgers (1) ausgebildeten Steg (3) angeordnet sind, welcher magnetisches Material enthält und nach unten konisch zulaufende Seitenwände (4, 5) aufweist, und daß sich im Oberflächenbereich der zum Steg (3) komplementären Ausnehmung (6) der Sockelplatte magnetisches Material (12) befindet.

3. Vorrichtung nach Anspruch 2, dadurch gekennzeichnet, dass das magnetische Material (12) aus der Sockelplatte (2) nach unten entfernbar ist.

4. Vorrichtung nach Anspruch 2 oder 3, dadurch gekennzeichnet, dass der Steg (3) einen parallel zur Oberseite (13) des Zahnkranzträgers (1) verlaufenden Absatz (7) aufweist, der einem Absatz (8) in der Ausnehmung (6) entspricht.

5. Vorrichtung nach Anspruch 4, dadurch gekennzeichnet, dass sich das magnetische Material (12) der Sockelplatte (2) im Bereich des Absatzes (8) der Ausnehmung (6) befindet.

6. Vorrichtung nach einem der vorstehenden Ansprüche, dadurch gekennzeichnet, dass die Sockelplatte (2) Bohrungen (11) aufweist, durch die die Sockelplatte (2) von unten mit dem Zahnkranzträger (1) verschraubbar ist.

7. Vorrichtung nach einem der vorstehenden Ansprüche, dadurch gekennzeichnet, dass es sich beim magnetischen Material um einen Kunststoff handelt, der mit einem Üblichen magnetischen Werkstoff gefüllt ist.

8. Vorrichtung nach einem der vorstehenden Ansprüche, dadurch gekennzeichnet, dass an der Unterseite (14) der Sockelplatte (2) in einem zentralen Bereich ein Magnet (18) eingelassen ist, mit dem die Vorrichtung an einem Artikulator befestigt werden kann.

## Claims

1. Apparatus for fabricating tooth rim models consisting of a more particularly substantially U-shaped tooth rim support (1) on the upper side (13) of which a tooth rim (15) is to be mounted and which is adapted to be inserted into a complementary recess (6) of a base plate (2) and is to be detachably connected thereto, and at the outer periphery of the tooth rim support ribs (9) are provided which are arranged parallel to each other, extend from the upper side in the direction of the underside and engage in grooves (10) complementary thereto disposed in the base plate (2), characterized in that the connection between the tooth rim support (1) and the base plate (2) is effected by magnetic forces.

2. Apparatus according to claim 1, characterized in that the ribs (9) are arranged on a web (3) formed on the bottom side of the tooth rim support (1) and containing magnetic material and having downwardly conically converging side walls (4, 5), and that in the surface region of the recess (6), complementary to the web (3), of the base plate magnetic material (12) is disposed.

3. Apparatus according to claim 2, characterized in that the magnetic material (12) is removable downwardly from the base plate (2).

4. Apparatus according to claim 2 or 3, characterized in that the web (3) comprises a shoulder (7) which extends parallel to the upper side (13) of the tooth rim support (1) and corresponds to a shoulder (8) in the recess (6).

5. Apparatus according to claim 4, characterized in that the magnetic material (12) of the base plate (2) is disposed in the region of the shoulder (8) of the recess (6).

6. Apparatus according to any one of the preceding claims, characterized in that the base plate (2) comprises bores (11) through which the base plate (2) can be screwed from below to the tooth rim support (1).

7. Apparatus according to any one of the preceding claims, characterized in that the magnetic material is a plastic which is filled with a usual magnetic material.

8. Apparatus according to any one of the preceding claims, characterized in that at the bottom side (14) of the base plate (2) in a central region a magnet (18) is let in with which the apparatus can be secured to an articulator.

## Revendications

1. Dispositif pour la fabrication de modèles d'arcades dentaires constitué par un support d'arcade dentaire en particulier sensiblement en forme de « U » (1) sur le côté supérieur duquel (13) il s'agit de fixer une arcade dentaire (15), et lequel support d'arcade dentaire doit être raccordé de façon insérable et amovible dans un évidement complémentaire (6) d'une plaque de base (2), moyennant quoi sur la périphérie extérieure du support d'arcade dentaire sont prévus des nervures (9) agencées parallèlement entre elles, s'étendant depuis le côté supérieur en direction du côté inférieur, nervures qui s'engrènent dans des rainures (10) agencées dans la plaque de base (2), complémentaire aux nervures, caractérisé en ce que la cohésion entre le support d'arcade dentaire (1) et la plaque de base (2) s'effectue par des forces magnétiques.

2. Dispositif selon la revendication 1, caractérisé en ce que les nervures (9) sont agencées sur un corps (3) constitué sur le côté inférieur du support d'arcade dentaire (1), lequel corps contient un matériau magnétique et comporte des parois latérales (4, 5) convergeant coniquement vers le bas, et en ce que dans la zone superficielle de l'évidement (6) complémentaire au corps (3), de la plaque de base se trouve un matériau magnétique (12).

3. Dispositif selon la revendication 2, caractérisé en ce que le matériau magnétique (12) peut être enlevé de la plaque de base (2) par le bas.

4. Dispositif selon la revendication 2 ou 3, caractérisé en ce que le corps (3) présente un appendice (7) s'étendant parallèlement au côté supérieur (13) du support d'arcade dentaire (1), appendice qui correspond à un appendice (8) dans l'évidement (6).

5. Dispositif selon la revendication 4, caractérisé en ce que le matériau magnétique (12) de la plaque de base (2) se trouve dans la zone de l'appendice (8) de l'évidement (6).

6. Dispositif selon l'une des revendications précédentes, caractérisé en ce que la plaque de base (2) présente des alésages (11) à travers lesquels la plaque de base (2) peut être fixée par vissage par le bas sur le support d'arcade dentaire (1).

7. Dispositif selon l'une des revendications précédentes, caractérisé en ce que le matériau magnétique est constitué par une matière synthétique qui est remplie d'un matériau magnétique usuel.

8. Dispositif selon l'une des revendications précédentes, caractérisé en ce que sur le côté inférieur (14) de la plaque de base (2) dans une zone centrale est inséré un aimant (18) grâce auquel le dispositif peut être fixé sur un articulateur.

FIG.2

FIG.1

FIG.3

FIG.4